(19) Europäisches Patentamt / European Patent Office / Office européen des brevets

(11) **EP 3 249 719 B1**

(12) **FASCICULE DE BREVET EUROPEEN**

(45) Date de publication et mention
de la délivrance du brevet:
**02.01.2019 Bulletin 2019/01**

(21) Numéro de dépôt: **16199128.6**

(22) Date de dépôt: **16.11.2016**

(51) Int Cl.:
*H01M 4/13* $^{(2010.01)}$     *H01M 4/134* $^{(2010.01)}$
*H01M 4/36* $^{(2006.01)}$     *H01M 4/38* $^{(2006.01)}$
*H01M 10/0525* $^{(2010.01)}$   *H01M 4/40* $^{(2006.01)}$
*H01M 4/587* $^{(2010.01)}$

(54) **CELLULE ÉLECTROCHIMIQUE DE BATTERIE LITHIUM-ION RECHARGEABLE**

ELEKTROCHEMISCHE ZELLE FÜR EINE WIEDERAUFLADBARE LITHIUM-IONEN-BATTERIE

ELECTROCHEMICAL CELL FOR RECHARGEABLE LITHIUM-ION BATTERY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.05.2016 EP 16171588**

(43) Date de publication de la demande:
**29.11.2017 Bulletin 2017/48**

(73) Titulaire: **Belenos Clean Power Holding AG
2502 Bienne (CH)**

(72) Inventeur: **Pitteloud, Cédric
2800 Delémont (FR)**

(74) Mandataire: **ICB SA
Faubourg de l'Hôpital, 3
2001 Neuchâtel (CH)**

(56) Documents cités:
**EP-A1- 0 817 294     WO-A1-2005/013397
FR-A1- 2 997 228     US-A1- 2012 105 007**

**Description**

Domaine de l'invention

L'invention concerne une cellule électrochimique de batterie lithium-ion rechargeable comprenant une électrode positive comprenant un premier matériau actif contenant éventuellement initialement une quantité Q1 de lithium actif, une électrode négative comprenant un second matériau actif et à la surface de laquelle une couche de passivation SEI (Solid Electrolyte Interphase) est susceptible de se former, et un électrolyte pour les ions lithium. La présente invention concerne également un procédé de fabrication d'une telle cellule électrochimique ainsi qu'une batterie lithium-ion rechargeable comprenant de telles cellules électrochimiques.

Arrière-plan de l'invention

Une telle cellule électrochimique est classiquement utilisée pour la réalisation de batteries lithium-ion rechargeables. Une batterie lithium-ion est un générateur électrochimique qui utilise le lithium sous forme ionique. Elle libère de l'électricité par échange réversible d'ions lithium entre une électrode positive et une électrode négative. Ces électrodes positive et négative comprennent un matériau actif qui est un matériau d'intercalation capable d'insérer/désinsérer du lithium ou de former un alliage avec celui-ci. Lors de la charge, les ions lithium sont désintercalés par oxydation de l'électrode positive, généralement à base d'un oxyde lithié, et migrent à travers l'électrolyte, conducteur ionique, jusqu'à l'électrode négative, généralement à base d'un matériau carboné, qui est réduit avec intercalation de ces ions. Simultanément, les électrons libérés à l'électrode positive rejoignent l'électrode négative à travers le circuit extérieur. Au cours de l'utilisation de la batterie, c'est-à-dire lors de la décharge, les phénomènes inverses s'opèrent spontanément. Ce processus peut se faire de manière similaire en faisant un alliage avec le lithium ou en le défaisant, par exemple dans le cas de l'emploi du silicium comme matériel actif de l'électrode négative où l'alliage est formé durant la charge de la batterie.

Au cours de la première insertion dans le matériau de l'électrode négative ou de la première formation de l'alliage avec le matériau de l'électrode négative, une partie du lithium actif contenu initialement dans l'électrode positive est consommée de façon irréversible. Cette irréversibilité est causée essentiellement par la formation d'une couche de passivation à la surface de l'électrode négative appelée «Solid Electrolyte Interphase», dite SEI. La SEI est semi-conductrice d'un point de vue électronique, perméable aux ions lithium et imperméable aux autres composants de l'électrolyte. Bien que sa formation consomme du lithium et donc engendre une capacité irréversible, cette couche protectrice joue un rôle salutaire dans le bon déroulement des cycles suivants, notamment en isolant l'électrode négative du milieu électrolytique. Toutefois la consommation irréversible de lithium par la SEI entraine une diminution de la quantité de matière active disponible, d'où une diminution de la quantité de courant pouvant être restituée par la batterie.

Afin de résoudre ce problème, il a été proposé d'ajouter à la cellule électrochimique du lithium sous forme métallique pour compenser la perte de lithium consommé par la SEI. Ceci permet d'équilibrer de nouveau la quantité de matière active de sorte que les quantités de courant libérées par chacune des deux réactions d'oxydoréduction soient voisines. Ce lithium supplémentaire peut être ajouté par exemple sous forme d'une électrode auxiliaire incorporée dans la cellule en contact avec l'électrolyte mais séparée des deux autres électrodes, tel que décrit dans le brevet US 6,335,115. Cette méthode a comme désavantage qu'il est nécessaire de supprimer cette troisième électrode dans le produit final. Cela pose des problèmes de constructions ainsi que d'avoir une diffusion du lithium la plus homogène pendant la lithiation. Une autre solution consiste à ajouter de la poudre de lithium stabilisée, tel que décrit dans la demande de brevet US 2009/0035663. Toutefois, la poudre de lithium due à la grande surface de ses particules est généralement très réactive. Pour pallier ce problème, une couche de protection (carbonate, huile) est formée à sa surface. Après la lithiation, cette couche de protection est toujours présente dans la cellule ajoutant des éléments indésirables et non nécessaires dans la batterie finale. Une autre solution consiste à réaliser une pré-lithiation de l'électrode négative en dehors de la cellule électrochimique, tel que décrit dans la publication WO 96/32754. Cette méthode présente l'inconvénient d'utiliser un électrolyte pendant cette étape, qui doit être ensuite lavé avant l'assemblage de la cellule.

La publication FR 2 997 228 A1 décrit une électrode négative pour cellule électrochimique de stockage d'énergie, cette électrode étant constituée d'un matériau composite comprenant un composé carboné apte à recevoir du lithium en insertion, et une proportion prédéterminée de $Li_3X$, avec X choisi parmi N, P, As, Sb.

La publication WO 2005/013397 décrit une batterie lithium-ion comprenant une électrode sur laquelle est laminé ou assemblé un treillis de lithium.

Les publications US 2012/105007 et EP 0 817 294 décrivent des cellules de batterie lithium-ion dans lesquelles une feuille de lithium est placée au contact du matériau actif de l'électrode négative afin d'effectuer une pré-lithiation de celle-ci et ainsi de compenser la perte de lithium lors de l'étape initiale de réalisation de la batterie.

Résumé de l'invention

L'invention a notamment pour objectif de pallier ces différents inconvénients.

Plus précisément, un objectif de l'invention est de proposer une cellule électrochimique de batterie lithium-ion rechargeable dont l'équilibre est préservé lors de son fonctionnement.

Un autre objectif de l'invention est de proposer une cellule électrochimique de batterie lithium-ion rechargeable permettant d'utiliser, comme matériau actif de l'électrode positive, un matériau qui ne contient pas initialement une quantité suffisante de lithium pour assurer l'équilibre de la cellule électrochimique, voire même un matériau initialement totalement dépourvu de lithium.

A cet effet, la présente invention concerne une cellule électrochimique de batterie lithium-ion rechargeable, comprenant une électrode positive comprenant un premier matériau actif contenant éventuellement initialement une quantité $Q1$ de lithium actif, une électrode négative comprenant un second matériau actif et à la surface de laquelle une couche de passivation SEI (Solid Electrolyte Interphase) est susceptible de se former, et un électrolyte pour les ions lithium.

Selon l'invention, l'électrode négative comprend, en regard de l'électrode positive associée, une feuille de lithium perforée présentant une épaisseur et un motif de perforations choisis pour constituer une quantité $Q2$ de lithium, la quantité $Q2$ de lithium fournie par la feuille de lithium perforée et la quantité $Q1$ de lithium actif fourni initialement par le premier matériau actif de l'électrode positive lorsque ledit premier matériau actif comprend initialement du lithium actif, constituant la quantité de lithium nécessaire et suffisante à l'équilibre de la cellule.

La présente invention comprend également un procédé de fabrication d'une cellule électrochimique telle que définie ci-dessus, comprenant :

- une étape de calcul de la quantité $Q2$ de lithium à fournir par la feuille de lithium perforée en fonction de la capacité bloquée dans la SEI, de la capacité du second matériau actif de l'électrode négative et de la capacité du lithium actif éventuellement contenu initialement dans le premier matériau actif de l'électrode positive,
- une étape de détermination de l'épaisseur et du motif de perforations de la feuille de lithium à perforer en fonction de la quantité $Q2$ calculée,
- une étape de réalisation de la feuille de lithium selon l'épaisseur déterminée et une étape de formation des perforations selon le motif de perforations déterminé,
- une étape d'assemblage de la feuille de lithium perforée réalisée à l'électrode négative, et
- une étape de montage de l'électrode négative et de sa feuille de lithium perforée avec l'électrode positive et l'électrolyte pour former la cellule.

Selon l'invention, le motif de perforations de la feuille de lithium forme des perforations dont les dimensions, les formes, les dispositions, les entraxes, les rapports d'ouverture, sont choisis en combinaison avec l'épaisseur de ladite feuille de lithium perforée pour fournir la quantité de lithium $Q2$.

En outre, les dimensions des perforations sont telles que la distance entre le centre de la perforation et le bord de la perforation est inférieure à 2 mm.

La présente invention comprend également une batterie lithium-ion rechargeable comprenant des cellules électrochimiques telle que définies ci-dessus.

L'utilisation d'une feuille de lithium perforée présentant une épaisseur et un motif de perforations déterminés, permet d'obtenir une cellule électrochimique équilibrée, comprenant la quantité de lithium suffisante mais sans excès après le premier cycle, afin de garantir un fonctionnement optimal de ladite cellule électrochimique. La présence d'une feuille de lithium perforée présentant une épaisseur et un motif de perforations déterminés permet également d'utiliser, comme matériau actif de l'électrode positive, un matériau ne contenant pas initialement une quantité suffisante de lithium pour assurer l'équilibre de la cellule électrochimique, voire même un matériau initialement totalement dépourvu de lithium, qui ne pouvait pas être utilisé de manière optimale jusqu'à présent dans une cellule électrochimique d'une batterie lithium-ion rechargeable.

Description sommaire des dessins

D'autres caractéristiques et avantages de l'invention apparaîtront plus clairement à la lecture de la description suivante d'un mode de réalisation de l'invention, donné à titre de simple exemple illustratif et non limitatif, et des figures annexées, parmi lesquelles :

- la figure 1 représente une vue en coupe schématique d'une cellule électrochimique selon l'invention préparée en vue d'une réalisation d'une batterie lithium-ion par empilement

- les figures 2 et 3 représentent une vue de dessus schématique de différents motifs de perforation d'une feuille de lithium utilisés selon l'invention,

- les figures 4 et 5 représentent une vue de détail des perforations des motifs de perforation correspondant aux figures 2 et 3 respectivement, et

- la figure 6 représente l'évolution de la capacité d'une cellule électrochimique selon l'invention en fonction du nombre de cycles de décharge-charge, à un niveau de courant de 0.5C entre 2 et 4V.

## Description détaillée d'un mode de réalisation préféré

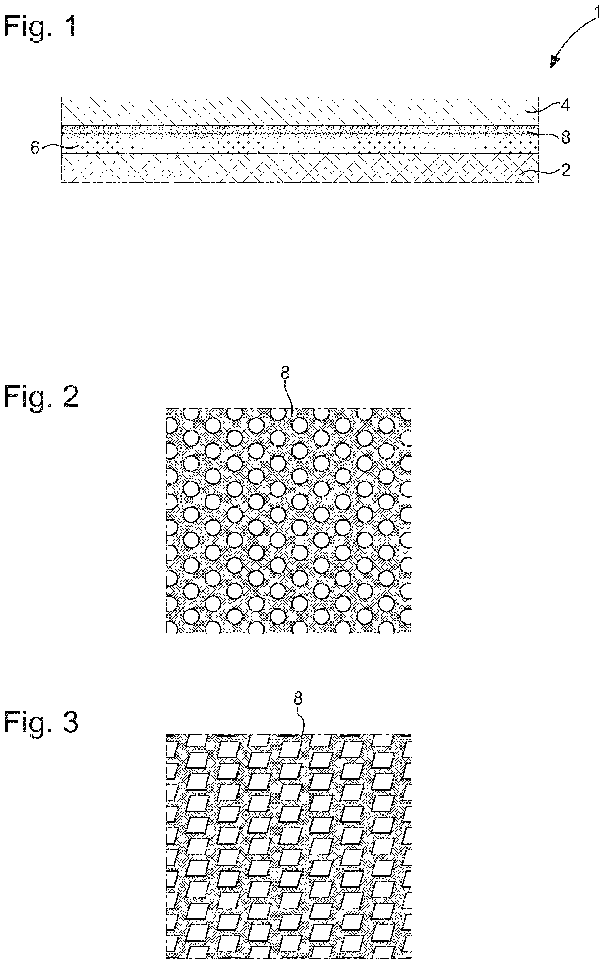

En référence à la figure 1, il est représenté une vue en coupe schématique d'une cellule électrochimique 1 selon l'invention. Dans la variante de réalisation représentée, la cellule électrochimique est préparée en vue de la réalisation d'une batterie par empilement, qui peut se présenter sous la forme de poche, dite «pouch » ou de pile-bouton. Il est bien évident que la présente invention s'applique également à la construction de batteries cylindriques, dans lesquelles les électrodes sont enroulées pour former des cellules cylindriques.

La cellule 1 comprend une électrode positive 2 comprenant un premier collecteur de courant et un premier matériau actif contenant éventuellement initialement une quantité Q1 de lithium actif, ledit premier matériau actif étant appliqué sur les deux faces du premier collecteur de courant. La cellule 1 comprend également une électrode négative 4 comprenant un second collecteur de courant et un second matériau actif, ledit second matériau actif étant appliqué sur les deux faces du second collecteur de courant. La cellule 1 comprend également un séparateur 6 disposé entre l'électrode positive 2 et l'électrode négative 4 associée. La cellule 1 renferme également un électrolyte pour les ions lithium.

Le premier matériau actif de l'électrode positive 2 comprend un matériau d'intercalation du lithium, c'est-à-dire capable d'insérer/désinsérer du lithium de manière réversible ou de former un alliage de manière réversible avec celui-ci. Le premier matériau actif de l'électrode positive 2 peut contenir initialement du lithium ou est capable d'être lithié lors de la première décharge de la cellule. De préférence, le premier matériau actif de l'électrode positive peut être choisi parmi le groupe comprenant des oxydes de métal de transition et leurs composés lithiés. Les oxydes de métal de transition sont à base par exemple de cobalt, de manganèse, de molybdène, ou de vanadium. Les composés lithiés comprennent de préférence $LiMPO_4$ où M = Ni, Co, Mn, Fe et leurs mélanges, $Li_xH_yV_3O_8$ où x est compris entre 0 et 4.5 et y est compris entre 0 et 6.5, $LiMn_2O_4$, $LiMn_{1.5}Ni_{0.5}O_4$, $LiNiMnCoO_2$ où le ratio entre Ni, Mn et Co peut varier entre 0 et 1, $LiNiCoAlO_2$ où le ratio entre Ni, Co et Al peut varier entre 0 et 1, $Li_2FePO_4F$, $V_2O_5$, S, $Li_{1-x}VOPO_4$, $Li_3V_2(PO4)_3$. Il est bien évident que tout matériau actif connu de l'homme du métier approprié pour l'électrode positive peut être utilisé.

Le premier matériau actif peut être classiquement combiné avec un agent conducteur, par exemple un composé carboné, et un liant, par exemple un liant polymère.

Le second matériau actif de l'électrode négative 4 comprend un matériau d'intercalation du lithium, c'est-à-dire capable d'insérer/désinsérer du lithium de manière réversible ou de former un alliage de manière réversible avec celui-ci. Il comprend une composition d'intercalation ou d'alliage dans laquelle le lithium peut s'intercaler ou former un alliage lors de la charge. De préférence, le second matériau actif comprend une composition d'intercalation à base de carbone, telle que du graphite, ou une composition d'alliage de silicium, d'aluminium, ou de lithium, telle que $Li_4Ti_5O_{12}$, ainsi que les alliages intermétalliques à base de Fe, Sn, Sb, Mn, Cu, Ni et autres métaux connus de l'homme du métier pour former des alliages appropriés avec le lithium. La présente invention ne concerne pas ici les batteries Li-métal pour lesquelles l'anode est en lithium-métal.

Lors de la première charge, une couche de passivation SEI se forme à la surface de l'électrode négative 4. Ce phénomène est connu et ne nécessite pas ici de description détaillée.

L'électrolyte permet de transporter les ions $Li^+$ d'une électrode à l'autre. On choisit par exemple un électrolyte liquide composé généralement d'un sel de lithium dissous dans un solvant organique. Le sel de lithium est par exemple l'hexafluorophosphate de lithium ($LiPF_6$), ou $LiClO_4$, LiFSI, LiTFSI, LiBOB, LiDFOB. L'électrolyte peut aussi se présenter sous forme solide, ou être composé de liquides ioniques.

Ces différents composants de la cellule électrochimique sont connus de l'homme du métier et ne nécessitent pas ici de description détaillée.

Selon l'invention, l'électrode négative 4 comprend, en regard de l'électrode positive 2 associée, entre l'électrode négative 4 et le séparateur associé 6, une feuille de lithium perforée 8 présentant une épaisseur et un motif de perforations choisis pour constituer une quantité Q2 de lithium, la quantité Q2 de lithium fournie par la feuille de lithium perforée 8 et la quantité Q1 de lithium actif fourni par le premier matériau actif de l'électrode positive 2 lorsque ledit premier matériau actif comprend initialement du lithium actif, constituant la quantité de lithium nécessaire et suffisante à l'équilibre de la cellule 1.

Une cellule équilibrée est une cellule dans laquelle la quantité de lithium est suffisante, et sans excès après le premier cycle, pour obtenir une cellule dont le fonctionnement est optimal. Cette quantité de lithium fournie au niveau de l'électrode négative par la feuille de lithium perforée, ajoutée à la quantité de lithium fourni par le premier matériau actif de l'électrode positive 2 lorsque ledit premier matériau actif comprend initialement du lithium actif, doit donc être suffisante pour couvrir la formation de la SEI ainsi que pour lithier entièrement le second matériau actif de l'électrode négative 4. La quantité de matériau actif est liée à la quantité de courant libérée, et donc à la capacité du matériau actif. Au niveau de l'électrode négative, on prévoit généralement une capacité supérieure de 2% à 10%, de préférence de 2% à 5%, à la capacité théorique du deuxième matériau actif de l'électrode négative, notamment afin d'éviter la formation de dendrites.

En conséquence, l'épaisseur et le motif de perforations de la feuille de lithium perforée 8 sont choisis de sorte que la quantité Q2 de lithium fourni par la feuille de lithium perforée 8 permet d'avoir une capacité du lithium fourni par la feuille de lithium perforée 8 telle que :

> capacité du lithium fourni par la feuille de lithium perforée + capacité du lithium actif éventuellement contenu initialement dans le premier matériau actif de l'électrode positive = capacité bloquée dans la SEI + (1+z) x capacité du second matériau actif de l'électrode négative, z étant compris entre 0.02 et 0.1, et de préférence entre 0.02 et 0.5.

Lorsque le premier matériau actif de l'électrode positive 2 contient initialement du lithium, la capacité du lithium actif alors contenu initialement dans le premier matériau actif de l'électrode positive est connue, et est par exemple fournie par le fabricant. De même, la capacité du second matériau actif de l'électrode négative est connue, et est par exemple fournie par le fabricant. La capacité bloquée dans la SEI est également connue et est déterminée par expérience. La SEI est calculée comme étant la différence de charge entre le premier et deuxième cycle d'un système de demi-pile « second matériau actif/lithium métallique », le lithium métallique constituant l'électrode négative du système.

Une fois la capacité du lithium à fournir par la feuille de lithium perforée calculée, l'épaisseur de la feuille de lithium et le motif de perforations sont déterminés pour obtenir ladite capacité, et donc la quantité de lithium Q2.

Selon l'invention, le motif de perforations de la feuille de lithium forme des perforations dont les dimensions, les formes, les dispositions, les entraxes, les rapports d'ouverture, sont choisis en combinaison avec l'épaisseur de ladite feuille de lithium perforée pour fournir la quantité de lithium Q2.

En outre, les dimensions des perforations sont telles que la distance entre le centre de la perforation et le bord de la perforation est inférieure à 2 mm, et de préférence inférieure à 1.5 mm.

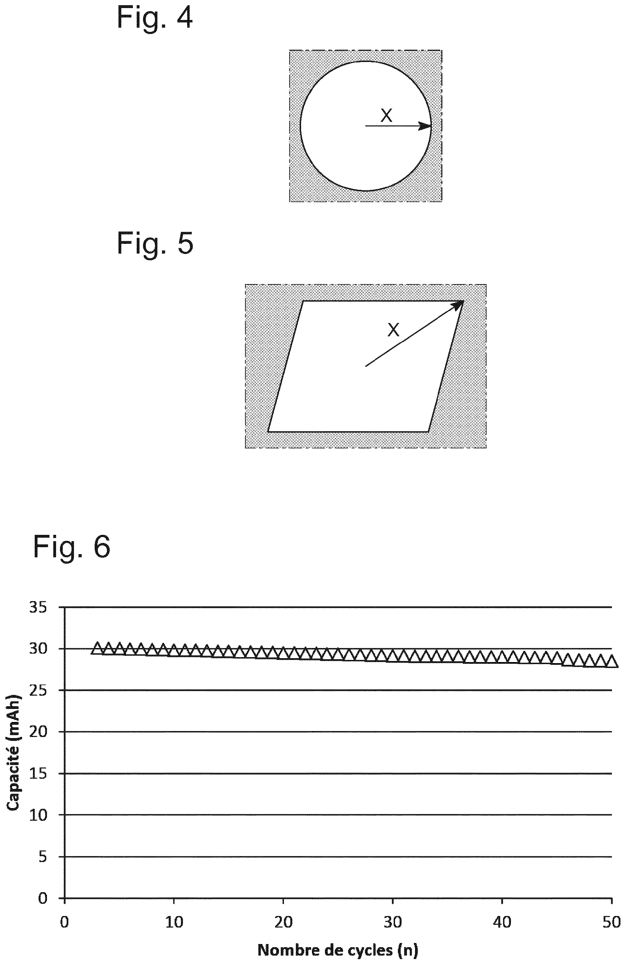

La figure 2 représente une vue de dessus schématique d'un motif de perforations d'une feuille de lithium perforée 8 sous la forme de perforations circulaires et la figure 4 représente le détail d'une perforation. La distance x entre le centre de la perforation et le bord de la perforation est inférieure à 2 mm, et de préférence inférieure à 1.5 mm. On peut utiliser par exemple une plaque de lithium perforée R3T4 comprenant des trous ronds de 3 mm de diamètre disposés en quinconce à 60° avec un entraxe de 4 mm, donnant un pourcentage de vide de 51.02%.

La figure 3 représente une vue de dessus schématique d'un motif de perforations d'une feuille de lithium perforée 8 sous la forme de perforations trapézoïdales et la figure 5 représente le détail d'une perforation. La distance x entre le centre de la perforation et le bord de la perforation est inférieure à 2 mm, et de préférence inférieure à 1.5 mm.

Il est bien évident que toute autre forme de perforations peut être utilisée.

Les perforations sont réalisées dans la feuille de lithium par tout procédé connu de l'homme du métier, par exemple par déchirements successifs et réguliers avec des points puis étirement de la matière.

L'épaisseur de la feuille de lithium peut être comprise entre 30 $\mu$m et 200 $\mu$m.

L'invention permet d'utiliser des feuilles de lithium dont l'épaisseur est encore suffisamment grande pour permettre d'utiliser facilement un procédé de fabrication des feuilles de lithium par laminage, mais sans excès de lithium, afin d'obtenir une cellule équilibrée. L'apport de lithium par la feuille de lithium perforée permet de pouvoir utiliser pour l'électrode positive, des matériaux actifs pauvres en lithium ou sans lithium, qui ne pouvaient pas être utilisés jusqu'à présent dans les cellules électrochimiques connues.

La présente invention concerne un procédé de fabrication d'une cellule électrochimique telle que définie ci-dessus, et comprenant :

- une étape de calcul de la quantité Q2 de lithium à fournir par la feuille de lithium perforée, déterminée comme on l'a vu ci-dessus à partir de la capacité de lithium à fournir, elle-même calculée à partir de la capacité bloquée dans la SEI, de la capacité du second matériau actif de l'électrode négative et de la capacité du lithium actif éventuellement contenu initialement dans le premier matériau actif de l'électrode positive,

- une étape de détermination du motif de perforations et de l'épaisseur de la feuille de lithium à perforer en fonction de la quantité Q2 calculée,
- une étape de réalisation de la feuille de lithium selon l'épaisseur déterminée et une étape de formation des perforations selon le motif de perforations déterminé,
- une étape d'assemblage de la feuille de lithium perforée réalisée à l'électrode négative, et
- une étape de montage de l'électrode négative et de sa feuille de lithium perforée avec l'électrode positive et l'électrolyte pour former la cellule.

Une fois réalisée, la feuille de lithium perforée 8 peut être assemblée à l'électrode négative 4 en regard de l'électrode positive 2 associée, entre l'électrode négative 4 et le séparateur associé 6, par laminage ou tout autre procédé approprié. Puis les autres éléments de la cellule sont assemblés d'une manière connue de l'homme du métier. Le tout est imprégné d'électrolyte.

La présente invention concerne également une batterie lithium-ion rechargeable comprenant des cellules électrochimiques telles que définies ci-dessus.

L'exemple suivant illustre la présente invention sans toutefois en limiter la portée.

Exemple :

Des cellules sont réalisées en utilisant pour chaque cellule :

- une électrode positive comprenant une couche active contenant comme matériau actif $Li_{0.5}H_{1.5}V_3O_8$, des composés de carbone conducteurs et un liant, la couche active étant déposée sur chaque face d'un collecteur de courant
- une électrode négative à base de carbone
- des feuilles de lithium perforées R3T4 d'épaisseur 50 $\mu$m, laminées sur chaque face de l'électrode négative
- un séparateur à base de polyéthylène disposé entre l'électrode positive et l'électrode négative recouverte de sa feuille de lithium perforée.

Une batterie est réalisée par empilement de ces cellules, ajout de l'électrolyte, et fermeture par scellage sous vide.

Le circuit ouvert de la cellule montre un potentiel positif de 3.5 V lorsque l'électrode négative est en carbone recouverte de sa feuille de lithium perforée. La batterie est ensuite chargée à 4V et différents cycles sont effectués. La figure 6 représente l'évolution de la capacité de la batterie de l'invention en fonction du nombre de cycles de décharge-charge, à un niveau de courant de 0.5C entre 2 et 4V. Les résultats montrent que la batterie comprenant une feuille de lithium perforée selon l'invention peut être opérationnelle sur plusieurs cycles même si le matériau actif de l'électrode positive ne contient pas initialement une quantité suffisante de lithium qui permettrait d'assurer l'équilibre des cellules.

**Revendications**

1. Cellule électrochimique (1) de batterie lithium-ion rechargeable, comprenant une électrode positive (2) comprenant un premier matériau actif contenant éventuellement initialement une quantité Q1 de lithium actif, une électrode négative (4) comprenant un second matériau actif et à la surface de laquelle une couche de passivation SEI (Solid Electrolyte Interphase) est susceptible de se former, et un électrolyte pour les ions lithium, l'électrode négative (4) comprenant, en regard de l'électrode positive (2), une feuille de lithium perforée (8) présentant une épaisseur et un motif de perforations choisis pour constituer une quantité Q2 de lithium, la quantité Q2 de lithium fournie par la feuille de lithium perforée (8) et la quantité Q1 de lithium actif fourni par le premier matériau actif de l'électrode positive (2) lorsque ledit premier matériau actif comprend initialement du lithium actif, constituant la quantité de lithium nécessaire et suffisante à l'équilibre de la cellule électrochimique (1), le motif de perforations de la feuille de lithium (8) formant des perforations dont les dimensions, les formes, les dispositions, les entraxes, les rapports d'ouverture, sont choisis en combinaison avec l'épaisseur de ladite feuille de lithium perforée (8) pour fournir la quantité de lithium Q2, **caractérisée en ce que** les dimensions des perforations sont telles que la distance entre le centre de la perforation et le bord de la perforation est inférieure à 2 mm.

2. Cellule selon la revendication 1, **caractérisée en ce que** l'épaisseur et le motif de perforations de la feuille de lithium perforée (8) sont choisis de sorte que la quantité Q2 de lithium fourni par la feuille de lithium perforée (8) permet d'avoir une capacité du lithium fourni par la feuille de lithium perforée (8) telle que :

capacité du lithium fourni par la feuille de lithium perforée + capacité du lithium actif éventuellement contenu initialement dans le premier matériau actif de l'électrode positive = capacité bloquée dans la SEI + (1+z) x capacité du second matériau actif de l'électrode négative, z étant compris entre 0.02 et 0.1.

3. Cellule selon la revendication 1, **caractérisée en ce que** les dimensions des perforations sont telles que la distance entre le centre de la perforation et le bord de la perforation est inférieure à 1.5 mm.

4. Cellule selon l'une des revendications précédentes, **caractérisée en ce que** le premier matériau actif de l'électrode positive (2) comprend un premier matériau d'intercalation du lithium.

5. Cellule selon la revendication précédente, **caractérisée en ce que** le premier matériau actif de l'électrode positive (2) est choisi parmi le groupe comprenant des oxydes de métal de transition et leurs composés lithiés.

6. Cellule selon l'une des revendications précédentes, **caractérisée en ce que** le second matériau actif de l'électrode négative (4) est une composition d'intercalation ou d'alliage de lithium.

7. Cellule selon la revendication précédente, **caractérisée en ce que** le second matériau actif de l'électrode négative (4) comprend un second matériau d'intercalation du lithium.

8. Procédé de fabrication d'une cellule électrochimique selon l'une des revendications 1 à 7, **caractérisé en ce qu'**il comprend :

   - une étape de calcul de la quantité Q2 de lithium à fournir par la feuille de lithium perforée (8) en fonction de la capacité bloquée dans la SEI, de la capacité du second matériau actif de l'électrode négative (4) et de la capacité du lithium actif éventuellement contenu initialement dans le premier matériau actif de l'électrode positive (2),
   - une étape de détermination du motif de perforations et de l'épaisseur de la feuille de lithium (8) à perforer en fonction de la quantité Q2 calculée, le motif de perforations de la feuille de lithium (8) formant des perforations dont les dimensions, les formes, les dispositions, les entraxes, les rapports d'ouverture, sont choisis en combinaison avec l'épaisseur de ladite feuille de lithium perforée (8) pour fournir la quantité de lithium Q2, les dimensions des perforations étant telles que la distance entre le centre de la perforation et le bord de la perforation est inférieure à 2 mm,
   - une étape de réalisation de la feuille de lithium perforée (8) selon l'épaisseur déterminée et une étape de formation des perforations selon le motif de perforations déterminé,
   - une étape d'assemblage de la feuille de lithium perforée (8) réalisée à l'électrode négative (4), et
   - une étape de montage de l'électrode négative (4) et de sa feuille de lithium perforée (8) avec l'électrode positive (2) et l'électrolyte pour former la cellule.

9. Procédé selon la revendication 8, **caractérisé en ce que** la feuille de lithium perforée (8) est assemblée à l'électrode négative (4) en regard de l'électrode positive (2) par laminage.

10. Batterie lithium-ion rechargeable comprenant des cellules électrochimiques selon l'une des revendications 1 à 7.

**Patentansprüche**

1. Elektrochemische Zelle (1) einer wiederaufladbaren Lithiumionen-Batterie, umfassend eine positive Elektrode (2) mit einem ersten aktiven Material, das gegebenenfalls anfänglich eine Menge Q1 an aktivem Lithium enthält, eine negative Elektrode (4) mit einem zweiten aktiven Material, auf deren Oberfläche eine Passivierungsschicht SEI (Solid Electrolyt Interphase) ausbildbar ist, und einen Elektrolyt für die Lithiumionen, wobei die negative Elektrode (4) gegenüber der positiven Elektrode (2) eine perforierte Lithiumschicht (8) enthält, die eine Dicke und ein Perforationsmuster aufweist, ausgewählt, um eine Menge Q2 an Lithium zu bilden, wobei die Menge Q2 an Lithium, die durch die perforierte Lithiumschicht (8) bereitgestellt wird, und die Menge Q1 an aktivem Lithium, die durch das erste aktive Material der positiven Elektrode (2) bereitgestellt wird, dann, wenn das erste aktive Material anfänglich aktives Lithium enthält, die Lithiummenge bilden, die notwendig und hinreichend für das Gleichgewicht der elektrochemischen Zelle (1) ist, wobei das Perforationsmuster der Lithiumschicht (8) Lochungen bildet, deren Abmessungen, Formen, Anordnungen, Mittenabstände und Öffnungsverhältnisse in Kombination mit der Dicke der perforierten Lithiumschicht (8) gewählt sind, um die Lithiummenge Q2 bereitzustellen, **dadurch gekennzeichnet, dass** die Abmessungen der Lochungen derart sind, dass der Abstand zwischen dem Zentrum der Lochung und dem Rand der Lochung kleiner als 2 mm ist.

2.  Zelle nach Anspruch 1, **dadurch gekennzeichnet, dass** die Dicke und das Perforationsmuster der perforierten Lithiumschicht (8) in der Weise gewählt sind, dass die Menge Q2 von Lithium, die durch die perforierte Lithiumschicht (8) bereitgestellt wird, eine Kapazität des durch die perforierte Lithiumschicht (8) bereitgestellten Lithium ermöglicht, so dass gilt:

Kapazität an Lithium, die durch die perforierte Lithiumschicht bereitgestellt wird + Kapazität an aktivem Lithium, das gegebenenfalls anfänglich in dem ersten aktiven Material der positiven Elektrode enthalten ist = gesperrte Kapazität in der SEI + (1 + z) × Kapazität des zweiten aktiven Materials der negativen Elektrode, wobei z im Bereich von 0,02 bis 0,1 liegt.

3.  Zelle nach Anspruch 1, **dadurch gekennzeichnet, dass** die Abmessungen der Perforationen derart sind, dass der Abstand zwischen der Mitte der Lochung und dem Rand der Lochung kleiner als 1,5 mm ist.

4.  Zelle nach einem der vorhergehenden Ansprüche, **dadurch gekennzeichnet, dass** das erste aktive Material der positiven Elektrode (2) ein erstes Lithium-Einlagerungsmaterial enthält.

5.  Zelle nach dem vorhergehenden Anspruch, **dadurch gekennzeichnet, dass** das erste aktive Material der positiven Elektrode (2) aus der Gruppe ausgewählt ist, die Übergangsmetalloxide und ihre Lithiumverbindungen enthält.

6.  Zelle nach einem der vorhergehenden Ansprüche, **dadurch gekennzeichnet, dass** das zweite aktive Material der negativen Elektrode (4) eine Zusammensetzung einer Einlagerung oder einer Legierung von Lithium ist.

7.  Zelle nach dem vorhergehenden Anspruch, **dadurch gekennzeichnet, dass** das zweite aktive Material der negativen Elektrode (4) ein zweites Lithium-Einlagerungsmaterial enthält.

8.  Verfahren zum Herstellen einer elektrochemischen Zelle nach einem der Ansprüche 1 bis 7, **dadurch gekennzeichnet, dass** es Folgendes umfasst:

    - einen Schritt zur Berechnung der Menge Q2 an Lithium, die von der perforierten Lithiumschicht (8) bereitzustellen ist, in Abhängigkeit der gesperrten Kapazität in SEI, der Kapazität des zweiten aktiven Materials der negativen Elektrode (4) und der Kapazität des aktiven Lithiums, das gegebenenfalls anfänglich in dem ersten aktiven Material der positiven Elektrode (2) enthalten ist,
    - einen Schritt zur Bestimmung des Perforationsmusters und der Dicke der zu perforierenden Lithiumschicht (8) in Abhängigkeit der berechneten Menge Q2, des Perforationsmusters der Lithiumschicht (8), das die Lochungen bildet, deren Abmessungen, Formen, Anordnungen, Mittenabstände und Öffnungsverhältnisse in Kombination mit der Dicke der perforierten Lithiumschicht (8) so gewählt sind, dass die Lithiummenge Q2 bereitgestellt wird, wobei die Abmessungen der Lochungen derart sind, dass die Abstände zwischen dem Zentrum der Lochung und dem Rand der Lochung kleiner als 2 mm ist,
    - einen Schritt zur Herstellung der perforierten Lithiumschicht (8) mit der bestimmten Dicke und einen Schritt des Bildens der Lochungen mit dem bestimmten Perforationsmuster,
    - einen Schritt zur Zusammenfügung der perforierten Lithiumschicht (8), der mit der negativen Elektrode (4) ausgeführt wird, und
    - einen Schritt zum Montieren der negativen Elektrode (4) und ihrer perforierten Lithiumschicht (8) mit der positiven Elektrode (2) und dem Elektrolyt, um die Zelle zu bilden.

**9.** Verfahren nach Anspruch 8, **dadurch gekennzeichnet, dass** die perforierte Lithiumschicht (8) mit der negativen Elektrode (4) gegenüber der positiven Elektrode (2) durch Pressen montiert wird.

**10.** Wiederaufladbare Lithiumionen-Batterie, umfassend elektrochemische Zellen nach einem der Ansprüche 1 bis 7.

**Claims**

**1.** Rechargeable electrochemical lithium-ion battery cell (1) comprising a positive electrode (2) comprising a first active material optionally initially containing a quantity Q1 of active lithium, a negative electrode (4) comprising a second active material and having a surface on which an SEI (Solid Electrolyte Interphase) passivation layer is able to form, and an electrolyte for the lithium ions, wherein, facing the positive electrode (2), the negative electrode (4) comprises a perforated lithium sheet (8) having a thickness and a pattern of perforations chosen to constitute a quantity Q2 of lithium, wherein the quantity Q2 of lithium supplied by the perforated lithium sheet (8) and the quantity Q1 of active lithium supplied by the first active material of the positive electrode (2), when said first active material initially comprises active lithium, constitutes the necessary quantity of lithium sufficient for balance of the electrochemical cell (1), wherein the perforation pattern of the lithium sheet (8) forms perforations, the dimensions, shapes, arrangements, centre distance of the axes and opening ratios of which are chosen in combination with the thickness of said perforated lithium sheet (8) to provide the quantity of lithium Q2, **characterised in that** the dimensions of the perforations are such that the distance between the centre of the perforation and the edge of the perforation is less than 2 mm.

**2.** Cell according to claim 1, **characterised in that** the thickness and the pattern of perforations of the perforated lithium sheet (8) are chosen in such a way that the quantity Q2 of lithium supplied by the perforated lithium sheet (8) allows a capacity of lithium supplied by the perforated lithium sheet (8) to be such that:

> capacity of lithium supplied by the perforated lithium sheet + capacity of active lithium optionally initially contained in the first active material of the positive electrode = capacity locked into the SEI + (1+z) x capacity of the second active material of the negative electrode, wherein z is in the range of between 0.02 and 0.1.

wherein z is in the range of between 0.02 and 0.1.

**3.** Cell according to claim 1, **characterised in that** the dimensions of the perforations are such that the distance between the centre of the perforation and the edge of the perforation is less than 1.5 mm.

**4.** Cell according to one of the preceding claims, **characterised in that** the first active material of the positive electrode (2) comprises a first intercalation material for the lithium.

**5.** Cell according to the preceding claim, **characterised in that** the first active material of the positive electrode (2) is chosen from among the group comprising transition metal oxides and their lithiated compounds.

**6.** Cell according to one of the preceding claims, **characterised in that** the second active material of the negative electrode (4) is an intercalation or alloy composition for lithium.

**7.** Cell according to the preceding claim, **characterised in that** the second active material of the negative electrode (4) comprises a second intercalation material for the lithium.

**8.** Process for the production of such an electrochemical cell according to one of claims 1 to 7, **characterised in that** it comprises:

> - a step of calculating the quantity Q2 of lithium to be supplied by the perforated lithium sheet (8) on the basis of the capacity locked into the SEI, the capacity of the second active material of the negative electrode (4) and the capacity of the active lithium optionally initially contained in the first active material of the positive electrode (2),
- a step of determining the pattern of perforations and the thickness of the lithium sheet (8) to be perforated on the basis of the calculated quantity Q2, wherein the perforation pattern of the lithium sheet (8) forms perforations, the dimensions, shapes, arrangements, centre distance of the axes and opening ratios of which are chosen in combination with the thickness of said perforated lithium sheet (8) to provide the quantity of lithium Q2, the dimensions of the perforations being such that the distance between the centre of the perforation and the edge of the perforation is less than 2 mm,
- a step of configuring the lithium sheet (8) in accordance with the determined thickness and a step of forming the perforations according to the determined pattern of perforations,
- a step of assembling the formed perforated lithium sheet (8) on the negative electrode (4), and
- a step of assembling the negative electrode (4) and its perforated lithium sheet (8) with the positive electrode (2) and the electrolyte to form the cell.

9. Process according to claim 8, **characterised in that** the perforated lithium sheet (8) is assembled on the negative electrode (4) facing the positive electrode (2) by rolling.

10. Rechargeable lithium-ion battery comprising electrochemical cells according to one of claims 1 to 7.

Fig. 1

Fig. 2

Fig. 3

# Fig. 4

# Fig. 5

# Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6335115 B
- US 20090035663 A
- WO 9632754 A
- FR 2997228 A1
- WO 2005013397 A
- US 2012105007 A
- EP 0817294 A